# EUROPÄISCHE PATENTSCHRIFT

(11) **EP 1 282 480 B1**
(45) Veröffentlichungstag und Bekanntmachung des Hinweises auf die Patenterteilung: **10.09.2003**
(21) Anmeldenummer: 01933610.6
(22) Anmeldetag: 12.04.2001
(51) Int. Cl.: B23K 9/20

(54) **SCHWEISSACHSE FÜR EINEN BOLZENSCHWEISSKOPF MIT EINER STEUERBAREN ANTRIEBSEINRICHTUNG FÜR EINEN LADESTIFT**
WELDING AXLE FOR A STUD WELDING HEAD WITH A CONTROLLABLE DRIVING DEVICE FOR A LOADING PIN
AXE DE SOUDAGE D'UNE TETE DE SOUDAGE DE BOULON COMPORTANT UN DISPOSITIF D'ENTRAINEMENT CONTROLABLE DESTINE A UNE TIGE DE CHARGEMENT

(30) Priorität: 12.04.2000 DE 10018239
(43) Veröffentlichungstag der Anmeldung: 12.02.2003
(73) Patentinhaber: Nelson Bolzenschweiss-Technik GmbH & Co. KG, 58285 Gevelsberg (DE)
(72) Erfinder: BUDDE, Karl-Friedrich, 58285 Gevelsberg (DE); MADSAK, Jürgen, 58339 Breckerfeld (DE)
(74) Vertreter: Eder, Christian, Dipl.-Ing.
(86) Internationale Anmeldenummer: DE0101453
(87) Internationale Veröffentlichungsnummer: WO01076801

(56) Entgegenhaltungen:
- DE-A- 4 400 350
- DE-A- 4 403 541
- GB-A- 2 118 878

## Beschreibung

Die Erfindung betrifft eine Schweißachse für einen Bolzenschweißkopf mit einer Antriebseinrichtung für einen Ladestift.

Derartige Schweißachsen, wie beispielsweise aus der DE 4 400 350 C2, DE 3 215 453 C1 und DE 4 403 541 C2 bekannt, werden in der Bolzenschweißtechnik in Schweißköpfen, beispielsweise einer Schweißpistole, verwendet, um Bolzen in einem Bolzenhalter für einen Schweißvorgang korrekt zu positionieren. Hierzu werden die Bolzen über eine Fördereinheit, einen Schlauch und einen Zuführkanal dem Ladekopf der Schweißachse zugeführt, und mittels eines Ladestifts in den Bolzenhalter in eine Endstellung geschoben.

Die Bewegung des Ladestifts erfolgt hierbei aus einer eingefahrenen (Ladeposition) in eine ausgefahrene Stellung (Verarbeitungsposition des Bolzens) üblicherweise durch einen pneumatischen Zylinder.

Nachteiligerweise muss bei einer Verarbeitung von unterschiedlichen Bolzen mit unterschiedlichen Bolzenlängen die Positionierung des Ladestifts jeweils mechanisch neu eingestellt werden oder bekannt sein, um eine korrekte Positionierung, wie beispielsweise einen vorgesehenen Bolzenüberstand, zu gewährleisten.

Eine Schweißachse gemäß dem Oberbegriff des Anspruchs 1 ist aus der DE 3 530 529 C2 bekannt.

Der Erfindung liegt demgegenüber die Aufgabe zu Grunde, eine Schweißachse sowie einen Bolzenschweißkopf und eine Bolzenschweißvorrichtung mit einer solchen zu schaffen, die eine korrekte Positionierung auch bei Verwendung von Bolzen mit unterschiedlicher Bolzenlänge auf einfache Art und Weise ermöglicht.

Diese Aufgabe wird erfindungsgemäß mit einer Schweißachse gemäß Anspruch 1, einem Bolzenschweißkopf gemäß Anspruch 7 und einer Bolzenschweißvorrichtung gemäß Anspruch 8 gelöst.

Durch die Steuerung des, beispielsweise in Richtung der Längsachse der Schweißachse, beweglichen Ladestifts in von den maximalen Endpositionen unterschiedliche Endpositionen kann ein zu verschweißendes Teil, beispielsweise ein Bolzen, in der Bolzenhalterung so positioniert werden, dass ein bestimmter Bolzenüberstand auch bei Verwendung unterschiedlicher Bolzen mit unterschiedlichen Bolzenlängen gewährleistet wird. Hierbei ist es möglich, für unterschiedliche Bolzenlängen der Bolzen sowohl unterschiedliche, innerhalb eines möglichen Bereichs für einen Bolzenüberstand einzustellen, als auch trotz unterschiedlicher Bolzenlängen einen identischen Bolzenüberstand zu erhalten.

Nach Erfindung weist die Schweißachse im Bereich der Endposition, also in der Ladeposition und/oder in der Position, in der der Bolzen im Bolzenhalter mit vorbestimmtem Bolzenüberstand positioniert wird, einen Sensor auf, um die Position bzw. die Positionen zu detektieren. Als Sensor können hierbei, wie vorstehend für die Wegmesseinrichtung geschildert, mechanische, optische oder elektrische Sensoren (ohm'sche, kapazitiv oder induktiv) verwendet werden.

Die Sensoren liefern hierbei Ist-Werte bzgl. der Position des Ladestifts und/oder des zu verschweißenden Teils, welche im Vergleich mit Soll-Werten zur entsprechenden Anpassung der Steuerung, also Regelung der Antriebseinrichtung, verwendet werden kann.

Hierdurch ist es vorteilhafterweise möglich, einen Bolzenüberstand unabhängig von der Länge eines Bolzens zu bestimmen, wobei ein solcher Bolzenüberstand als Soll-Wert wählbar sein kann.

Muss bei einer Schweißachse ohne Regelung für einen korrekten Bolzenüberstand die augenblickliche Länge des zu ladenden Bolzens bekannt sein und die Antriebseinrichtung entsprechend gesteuert werden, so ist bei einer derart geregelten Schweißachse die Kenntnis des zu ladenden Bolzens bzw. seiner Länge nicht nötig, da ein korrekter Bolzenüberstand über Vergleich von Soll-Wert und Ist-Wert erreicht wird.

Auf diese Weise kann eine zeitaufwändige und umständliche manuelle Einstellung, beispielsweise Auswechseln des Bolzenhalters u.ä., vermieden werden.

In vorteilhafter Ausgestaltung der Erfindung weist die Schweißachse für die Bewegung des zu verschweißenden Teils und/oder des Ladestifts eine Wegmesseinrichtung auf, beispielsweise in Form eines induktiven, kapazitiven oder ohmschen Sensors, welcher in der Antriebseinrichtung selbst, entlang des Ladestifts oder im Ladekopf angeordnet ist. Hierdurch ist es vorteilhafterweise möglich, einen zurückgelegten Weg des Ladestifts oder des Bolzens zu messen, wobei das Ergebnis einer Auswertung oder einer entsprechend angepassten Steuerung und somit Regelung der Antriebseinrichtung dienen kann.

In weiterer Ausgestaltung der Erfindung ist die Antriebseinrichtung als elektromotorische Antriebseinrichtung, beispielsweise als Spindelmotor oder gar als Schrittmotor mit sogenannten linearen Aktuatoren ausgebildet, so dass vorteilhafterweise die Steuerung einer solchen Antriebseinrichtung in Abhängigkeit elektrischer Größen, wie Stromstärke, Spannungshöhe, Frequenz usw., erfolgt.

Hierbei kann vorteilhafterweise auf eine im herkömmlichen Stand der Technik nötige Druckluftversorgung verzichtet werden und auf eine bereits für den späteren Schweißvorgang vorhandene Energiequelle, nämlich elektrischer Strom bzw. elektrische Energie, zurückgegriffen werden. Besonders vorteilhaft wirkt sich dieser Verzicht bei elektrisch betriebenen Schweißköpfen aus, die außer für die Bolzenbereitstellung im Ladekopf keinerlei Druckluftversorgung benötigen.

Derartige Schweißachsen nach der Erfindung können beispielsweise in einem Bolzenschweißkopf an einem Schweißautomaten oder einer Bolzenschweißpistole und anderen Bolzenschweißvorrichtungen verwendet werden.

Weitere Ausführungsformen der Erfindung ergeben sich aus den abhängigen Ansprüchen.

Die Erfindung wird nachfolgend anhand eines in der Zeichnung dargestellten Ausführungsbeispiels näher erläutert. In der Zeichnung zeigen:
- Fig. 1: eine schematische Darstellung eines Bolzenschweißkopfes mit einer Schweißachse nach der Erfindung mit einem in einem Bolzenhalter in Endposition befindlichen Bolzen und
- Fig. 2: einen Bolzenschweißkopf nach Fig. 1 während eines Ladevorgangs mit einem Bolzen.

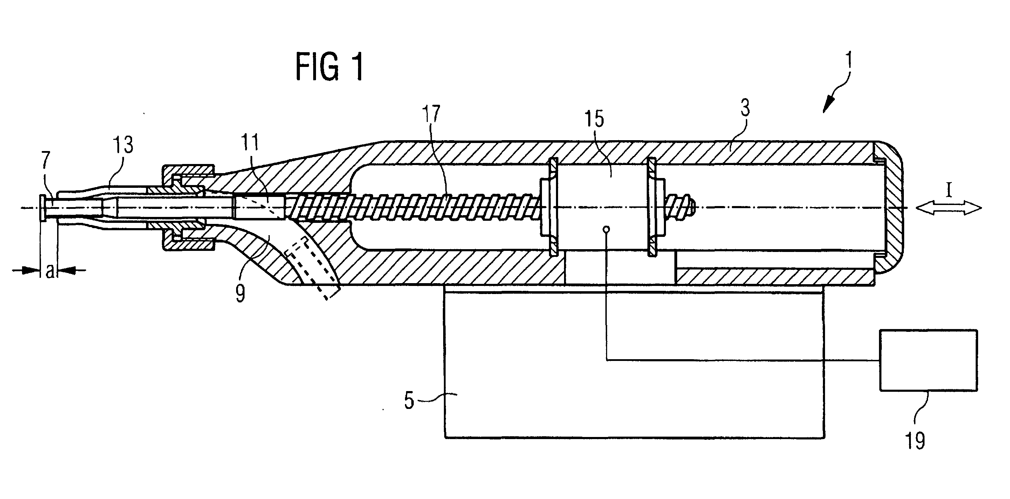

Der in Fig. 1 dargestellte Bolzenschweißkopf 1 weist eine Schweißachse 3 und eine Schweißkopfantriebseinrichtung 5 auf, die die Schweißachse 1 in bekannter Weise axial (Pfeil I in Fig. 1 ) für einen Schweißvorgang bewegt.

Fig. 1 zeigt des Weiteren, dass der Schweißachse 3 des Bolzenschweißkopfs 1 mittels einer nicht näher dargestellten automatischen Zuführvorrichtung zu verschweißende Teile 7, beispielsweise Bolzen, zugeführt werden können. Dies erfolgt mittels eines Zuführkanals 9 im vorderen Bereich des Schweißkopfs 1, welcher in üblicher Weise mittels eines Schlauchs (nicht dargestellt) mit der automatischen Zuführvorrichtung verbunden ist

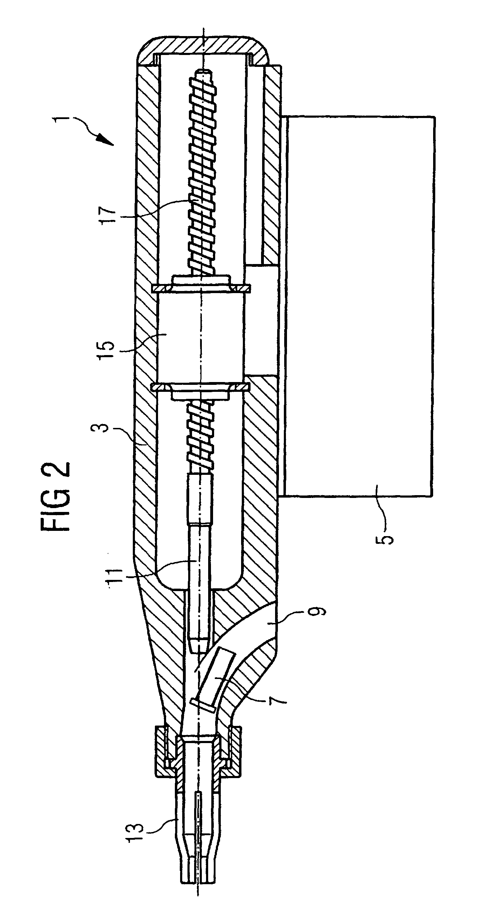

Wie in Fig. 2 dargestellt, wird ein zu verschweißendes Teil 7 über den Zuführkanal 9 in eine Bohrung für einen Ladestift 11 zugeführt, während sich der Ladestift 11, wie in Fig. 2 dargestellt, in seiner Ladeposition, also zurückgezogener Position, befindet Im Folgenden wird das zu verschweißende Teil 7 durch den Ladestift entlang der Bohrung in Richtung des Bolzenhalters geschoben, bis das zu verschweißende Teil 7 im Bolzenhalter seine Endposition mit entsprechend gewünschtem und vorbestimmtem Bolzenüberstand a erreicht (s. Fig. 1) und im Bolzenhalter 13 in üblicher Weise gehaltert wird.

Die axiale Bewegung des Ladestifts 11 im Wesentlichen entlang der Längsachse (bzw. parallel hierzu) des Bolzenschweißkopls 1 erfolgt hierbei über einen elektrisch angetriebenen Schrittmotor, beispielsweise einem sogenannten linearen Aktuator 15, welcher (abgesehen von seinem beispielsweise inneren rotierbaren Element) ortsfest und drehfest im Inneren der Schweißachse 3 angeordnet ist. Um den Ladestift 11 sicher zu steuern, weist der Ladestift 11 an seinem der Stirnseite der Schweißachse 3 abgewandten Ende zumindest für einen Bereich seiner maximalen Bewegung eine Spindel 17 auf, welche mit einem Innengewinde eines rotierbaren Elements bzw. Rotors des linearen Aktuators 15 zusammenwirkt, um die Drehbewegung des linearen Aktuators in eine sichere und kontrollierte Längsbewegung des Ladestifts 11 umzusetzen.

Selbstverständlich steht der lineare Aktuator 15 nur beispielhaft für eine steuerbare elektrische, elektromechanische, induktive, pneumatische o.ä. Antriebseinrichtung um den Ladestift 11 in vorbestimmte, wählbare zusätzliche von den maximalen (mechanisch eingestellten) Endpositionen unterschiedliche Positionen zu bringen. Hierdurch ist es gegenüber herkömmlichen Schweißachsen vorteilhafterweise möglich, wenigstens eine weitere Position, beispielsweise für eine weitere Verarbeitungsposition eines Bolzens 7 mit anderen Bolzenlängen, vorzusehen. So kann der Ladestift 11 für einen Bolzen A mit einer Bolzenlänge L_{A} um eine gewünschte (vorbestimmte) Anzahl X_{A}, beispielsweise 1000, Schritte und für einen Bolzen B mit einer größeren Bolzenlänge L_{B} um eine gewünschte (vorbestimmte) geringere Anzahl X_{B}, beispielsweise 600, Schritte vorwärts bewegt werden, um jeweils einen gewünschten Bolzenüberstand Ü_{A} bzw. Ü_{B}, oder einen identischen Bolzenüberstand Ü_{AB} zu erhalten.

Die Umsetzung einer motorischen Bewegung der Antriebseinrichtung, beispielsweise rotierend oder linear, in die Längsbewegung des Ladestifts 11 kann hierbei, anstatt wie im Ausführungsbeispiel dargestellt, über beliebige zusammenwirkende Mittel, wie Eingriffselemente, Zahnleisten, Zahnräder, Riemen o.ä. erfolgen.

Weiterhin weist der in Fig. 1 dargestellte Bolzenschweißkopf 1 eine schematisch dargestellte Steuerungseinrichtung 19 auf, über welche der lineare Aktuator 15 und damit die Bewegung des Ladestifts 11 in axialer Richtung elektrisch gesteuert werden kann.

Hierdurch ist es möglich, die Endpositionen des Ladestifts 11, also dessen zurückgezogene Ladeposition und insbesondere dessen vorgeschobene Endposition zur Positionierung eines zu verschweißenden Teils 7 im Bolzenhalter 13 mit gewünschtern Bolzenüberstand a zu beeinflussen bzw. frei zu wählen. Auf diese Weise kann beispielsweise bei einem Wechsel von Bolzen mit unterschiedlichen Längen der entsprechende Bolzenüberstand auf einfache Weise über die Steuerungseinrichtung 19 eingestellt werden.

Zusätzlich ist es denkbar, die ordnungsgemäße Positionierung, also ein vorbestimmter Bolzenüberstand a eines zu verschweißenden Teils 7, mittels eines Sensors als Ist-Wert festzustellen und entsprechend einem gewünschten Soll-Wert den Ladestift 11 mittels des linearen Aktuators 15 und dessen in Fig. 1 nur schematisch dargestellter Steuerungseinrichtung 19 zu bewegen.

Der Sensor für eine solche Regelung kann sich hierbei an beliebiger Stelle der Bohrung für den Ladestift 11 oder des Bolzenhalters 13 befinden, welche bei einem Ladevorgang durch ein zu verschweißendes Teil 7 durchlaufen werden. Auf diese Weise kann bei bekannter Entfernung der Sensorposition zur gewünschten Endposition des Bolzens im Bolzenhalter durch einfache Differenzenbildung (beispielsweise mit dem Istwert des Detektierens der vorderen Stirnseite des Bolzens) der noch für eine optimale Bolzenpositionierung im Bolzenhalter nötige Wert für den (weiteren) Vorschub errechnet werden und über die Steuereinrichtung 19 und die Antriebseinrichtung ausgeführt werden.

## Patentansprüche

1. Schweißachse (3) für einen Bolzenschweißkopf (1) mit einer Antriebseinrichtung für einen in seiner Längsrichtung bewegbaren Ladestift (11) mit maximalen Endpositionen, um ein zu verschweißendes Teil (7) zu laden und in einem Bolzenhalter (13) in Position zu bringen, wobei der Ladestift (11) mittels der Antriebseinrichtung in wenigstens eine weitere Endposition, unterschiedlich zu den maximalen Endpositionen, über eine Steuereinrichtung (19) steuerbar ist, um zu verschweißende Teile (7) unterschiedlicher Länge zu laden und in dem Bolzenhalter (13) in vorbestimmte wählbare Positionen zu bringen,
**dadurch gekennzeichnet,**
**dass** die Schweißachse (3) im Bereich einer Bohrung für den Ladestift (11) oder des Bolzenhalters (13) einen Sensor aufweist, um die Position des zu verschweißenden Teils (7) zu detektieren und
**dass** die Antriebseinrichtung in Abhängigkeit von einer durch den Sensor detektierten Position mittels einer Steuereinrichtung (19) regelbar ist, um eine korrekte Endposition des zu verschweißenden Teils (7) im Bolzenhalter (13) zu gewährleisten.

2. Schweißachse (3) nach Anspruch 1, **dadurch gekennzeichnet, dass** die Schweißachse (3) eine Wegmesseinrichtung für die Bewegung des zu verschweißenden Teils (7) und/oder des Ladestifts (11) aufweist.

3. Schweißachse (3) nach Anspruch 1 oder 2, **dadurch gekennzeichnet, dass** die Antriebseinrichtung als elektromotorische Antriebseinrichtung ausgebildet ist.

4. Schweißachse (3) nach Anspruch 3, **dadurch gekennzeichnet, dass** die Antriebseinrichtung als Spindelmotor ausgebildet ist.

5. Schweißachse (3) nach einem der vorhergehenden Ansprüche, **dadurch gekennzeichnet, dass** die Antriebseinrichtung als Schrittmotor (15) ausgebildet ist.

6. Schweißachse (3) nach einem der vorhergehenden Ansprüche, **dadurch gekennzeichnet, dass** die Antriebseinrichtung eine Wegmesseinrichtung aufweist.

7. Bolzenschweißkopf (1) mit einer Schweißkopfantriebseinrichtung (5) und einer Schweißachse (3), **dadurch gekennzeichnet, dass** die Schweißachse (3) nach einem der vorhergehenden Ansprüche ausgebildet ist.

8. Bolzenschweißvorrichtung mit einem Bolzenschweißkopf nach Anspruch 7.

## Claims

1. Welding arbor (3) for a stud welding head (1) having a drive device for a loading pin (11), which is movable in its longitudinal direction and has maximum end positions, for loading a part (7) to be welded and for bringing said part into position in a stud holder (13), wherein via a control device (19) the loading pin (11) is manoeuvrable by means of the drive device into at least one further end position, which differs from the maximum end positions, in order to load parts (7) of differing length, which are to be welded, and bring said parts into predetermined selectable positions in the stud holder (13),
**characterized in**
**that** the welding arbor (3) has a sensor in the region of a bore for the loading pin (11) or in the region of the stud holder (13) for detecting the position of the part (7) to be welded and
**that** by means of a control device (19) the drive device is controllable in dependence upon a position detected by the sensor in order to guarantee a correct end position of the part (7) to be welded in the stud holder (13).

2. Welding arbor (3) according to claim 1, **characterized in that** the welding arbor (3) comprises a displacement measuring device for the movement of the part (7) to be welded and/or of the loading pin (11).

3. Welding arbor (3) according to claim 1 or 2, **characterized in that** the drive device takes the form of an electromotive drive device.

4. Welding arbor (3) according to claim 3, **characterized in that** the drive device takes the form of a spindle motor.

5. Welding arbor (3) according to one of the preceding claims, **characterized in that** the drive device takes the form of a stepping motor (15).

6. Welding arbor (3) according to one of the preceding claims, **characterized in that** the drive device comprises a displacement measuring device.

7. Stud welding head (1) having a welding-head drive device (5) and a welding arbor (3), **characterized in that** the welding arbor (3) is designed according to one of the preceding claims.

8. Stud welding apparatus having a stud welding head according to claim 7.

## Revendications

1. Axe de soudage (3) pour une tête (1) de soudage de boulon comportant un dispositif d'entraînement pour une tige de chargement (11) déplaçable dans sa direction longitudinale et comportant des positions d'extrémité maximales, pour charger une pièce à souder (7) et l'amener en position dans un porte-boulon (13), la tige de chargement (11) étant commandable à l'aide du dispositif d'entraînement dans au moins une autre position d'extrémité, différente des positions d'extrémité maximales, par l'intermédiaire d'un dispositif de commande (19) pour charger des pièces à souder (7) ayant des longueurs différentes et les amener dans le porte-boulon (13) dans des positions prédéterminées pouvant être choisies,
**caractérisé en ce**
**que** l'axe de soudage (3) comporte, dans la zone d'un perçage pour la tige de chargement (11) ou du porte-boulon (13), un capteur servant à détecter la position de la pièce à souder (7), et
**que** le dispositif d'entraînement est réglable au moyen d'un dispositif de commande (19) en fonction de la position détectée par le capteur, de manière à garantir une position d'extrémité correcte de la pièce à souder (7) dans le porte-boulon (13).

2. Axe de soudage (3) selon la revendication 1, **caractérisé en ce que** l'axe de soudage (3) comporte un dispositif de mesure de distance pour le déplacement de la pièce à souder (7) et/ou de la tige de chargement (11).

3. Axe de soudage (3) selon la revendication 1 ou 2, **caractérisé en ce que** le dispositif d'entraînement est agencé sous la forme d'un dispositif d'entraînement à moteur électrique.

4. Axe de soudage (3) selon la revendication 3, **caractérisé en ce que** le dispositif d'entraînement est agencé sous la forme d'un moteur à broche.

5. Axe de soudage (3) selon l'une des revendications précédentes, **caractérisé en ce que** le dispositif d'entraînement est agencé sous la forme d'un moteur pas-à-pas (15).

6. Axe de soudage (3) selon l'une des revendications précédentes, **caractérisé en ce que** le dispositif d'entraînement comporte un dispositif de mesure de distance.

7. Tête (1) de soudage pour boulon comportant un dispositif (5) d'entraînement de la tête de soudage et un axe de soudage (3), **caractérisée en ce que** l'axe de soudage (3) est agencé selon l'une des revendications précédentes.

8. Dispositif de soudage de boulon comportant une tête de soudage de boulon selon la revendication 7.
